# EUROPEAN PATENT APPLICATION

(11) **EP 1 953 961 A1**
(43) Date of publication of application: **06.08.2008**
(21) Application number: 08100974.8
(22) Date of filing: 28.01.2008
(51) Int. Cl.: H04L 12/24

(54) **Extensible system for network discovery**

(30) Priority: 31.01.2007 US 701300
(71) Applicant: Hewlett-Packard Development Company, L.P., Houston, TX 77070 (US)
(72) Inventor: Chen, Weiwen, Ft. Collins, CA 80528-9599 (US); Bryant, Craig W, Ft. Collins, CO 80528-9599 (US); Pulsipher, Eric, Ft. Collins, CO 80528-9599 (US); Natarajan, Srikanth, Ft. Collins, CO 80528-9599 (US); Okine, Daniel, Ft. Collins, CO 80528-9599 (US); Wang, Zhi-Qiang, Ft. Collins, CO 80528-9599 (US); Behera, Manas Kumar, Ft. Collins, CO 80528-9599 (US); Karungulam, Kumar Ramiah, Ft. Collins, CO 80528-9599 (US); Trujillo, Frank, Ft. Collins, CO 80528-9599 (US); Notess, Peter, Ft. Collins, CO 80528-9599 (US); Dorland, Chiachu, Roseville, CA 95747 (US)
(74) Representative: Lloyd, Richard Graham

(57) **Abstract**

A network system comprises a discovery subsystem that identifies, enables for consumption, and consumes information. The discovery subsystem isolates business contents and device-specific logic using modular domain-specific contents and data definitions for normalizing the domain-specific contents and describing attributes and value types that uniquely define domain content independently of a device.

## Description

### BACKGROUND OF THE INVENTION

The network management market is supported by numerous devices, supplied by many various vendors, creating a challenge for a network discovery system to support the breadth of vendors and depth of devices on the market.

### SUMMARY

In accordance with an embodiment of a network system, a discovery subsystem identifies, enables for consumption, and consumes information. The discovery subsystem isolates business contents and device-specific logic using modular domain-specific contents and data definitions for normalizing the domain-specific contents and describing attributes and value types that uniquely define domain content independently of a device.

### BRIEF DESCRIPTION OF THE DRAWINGS

Embodiments of the invention relating to both structure and method of operation may best be understood by referring to the following description and accompanying drawings:
**FIGUREs 1A****,** **1B****,** and **1C** are schematic block diagrams showing embodiments of a network system that implements network discovery;
**FIGUREs 2A** through **2J** are flow charts depict embodiments of automated methods for network discovery;
**FIGURE 3** is a schematic block diagram illustrating a snapshot of an embodiment of an analyzer infrastructure in an overall discovery architecture;
**FIGURE 4A** is a class diagram showing an embodiment of Analysis and describing interactions with Analyzers to manage dependency and streamlined discovery;
**FIGURE 4B** is a simple sequence diagram for Analysis describing an example technique for analyzing a node;
**FIGUREs 5A****,** **5B****,** and **5C** respectively illustrate a schematic block diagram for an embodiment of a Staged Analyzer, an embodiment of a class for the Staged Analyzer, and a simple sequence diagram for an analyzer that processes the node analysis;
**FIGURE 6** is a simple class diagram showing an embodiment of a CollectManager;
**FIGUREs 7A****,** **7B****,** and **7C** respectively depict a class diagram for a DataDefinition in an embodiment of a DataDefinition Manager, a simple sequence diagram to use DataDefinition to collect and process data from SNMP Talker, and an embodiment of code for a sample out-of-box DataDefinition for XSRP;
**FIGUREs 8A****,** **8B****,** and **8C** respectively depict an initial draft class diagram depicts an example of a DataDefinition(DD) Mapping Rule, a table that depicts content in each Mapping as an XML String, and a sequence diagram describing how mapping rules are involved in the discovery process;
**FIGURE 9** is a diagram showing an example of a Data Flow to collect data for a node;
**FIGUREs 10A****,** **10B****,** and **10D** are tables showing examples of a DataDefinition for a physical component, demonstrating an example of how the DataDefinition and Mapping Rules can be developed when adding a new content or extending a new device; and
**FIGURE 10C** is a schematic block diagram illustrating an example of the structure of overall mapping rules.

### DETAILED DESCRIPTION

A network system is disclosed that forms a robust framework to support content and/or device extensibility for network discovery.

An illustrative network discovery system is extensible to support emerging vendors and/or devices, efficiently with respect to reduced or minimum lead times. The network discovery system enables the robust framework that breaks traditional dependencies between business contents and device specific logics, and forms templates and default behaviors to plug in the business contents and device specific logics. The created framework enables support of new devices, expanding functionality of an existing network discovery system quickly, simply and easily. The extensible framework enables improvement in quality and maintainability of the discovery system.

The illustrative network discovery system and method supports a variety of devices, enabling handling of content for existing devices connected to a network as well as new devices that are added to the network. The illustrative network discovery system and method drives processing of content as efficiently as possible.

A problem in the network domain is the many device types and models that can be connected to the network. Protocols in the devices are defined rigidly. When a new type of content is discovered, substantial changes are warranted in a conventional system to allow handling of the new content. Often the type of data collection can differ for the new content. The new content can introduce abstractions to separate business data due to device-specific details. To add new protocols on the discovery of new devices can cause reliability and quality difficulties.

The illustrative network discovery system and method enables rapid response to connection of new devices to the network by abstracting business logic into independent pieces that are modular and specific to content rather than to devices. Support for new devices can thus be implemented dynamically.

In absence of the illustrative network discovery functionality, for example in a network node management system, support for new content and/or a new device is not trivial, partly because business contents and device specific logics are coupled tightly and pervasively through end-to-end discovery processing. When a new device support is added, many components are impacted at various places, making device extension difficult and introducing product quality risk and increasing maintenance costs. The illustrative network discovery system and operating method create a new framework to break the tight coupling between business contents and corresponding device specific logics. Changes to the business contents or device specific logics are isolated. With the depicted framework, new content or device can be extended independently. Developers can easily follow the sample templates to extend the content or device specific logic. The framework dynamically combines the extended business contents and devices at runtime, improving the ability to extend new device as well as product quality.

In absence of the illustrative network discovery functionality, to support a new device developers make changes at many different locations because no clear cut distinction exists between business content and device specific logics. Such changes call for a developer to have extensive knowledge of the whole product, along with extensive testing to avoid backward incompatibility. A small bug in new code implemented by the developer can cause the whole product to collapse.

The illustrative network discovery system and method introduce a capability to create a robust framework that breaks the dependencies between Business Contents and Device Specific logics and accelerates support for discovering the emerging Network device and content. The framework is robust because the addition of new content does not impact other existing content.

The illustrative network discovery system and method enables users to extend content and device separately, introducing a Content processor that is business-specific and a Data Collector that is more device-specific. In most cases, the content is relatively stable and is usually updated infrequently. Users can simply extend the Data Collector to support more devices, for example by adding new Collect Mapping Rules without any coding. Users can also customize Converter and Collect Mapping Rules to meet specific data collection conditions. Consequently, the illustrative network discovery system and method can greatly improve the ability to extend new content and/or device conditions. Improving over previous systems wherein any extension support is a laborious endeavor.

The illustrative network discovery system and method can automatically integrate all content and/or device solutions, and can also isolate failures from the artifacts of the solution so that a failure in one artifact or a solution does not collapse the whole system. Accordingly, the illustrative discovery system is more robust and scalable and enhances maintainability and hence creates potential to greatly reduce the product support costs. Device support is improved, for example by implementation of abstraction definitions and device support matrices that enable prompt response to addition of a new device, reducing time to market of the added device.

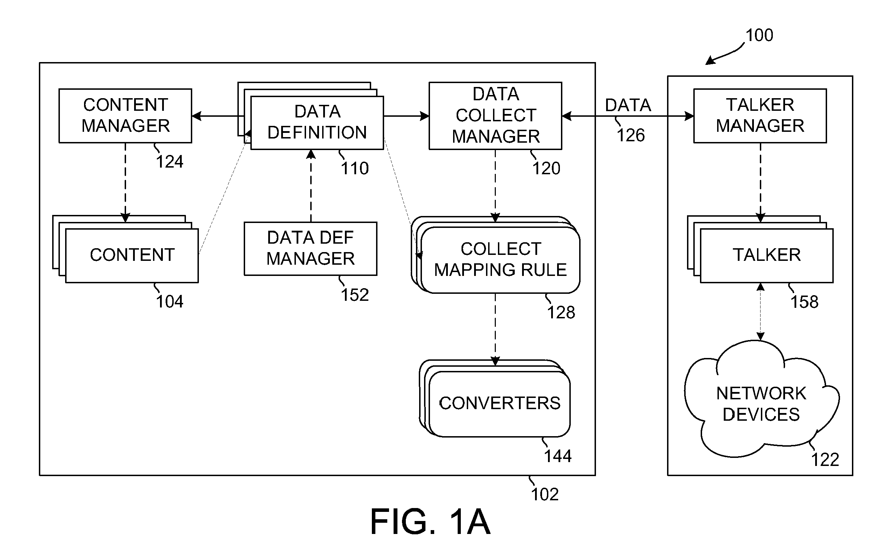

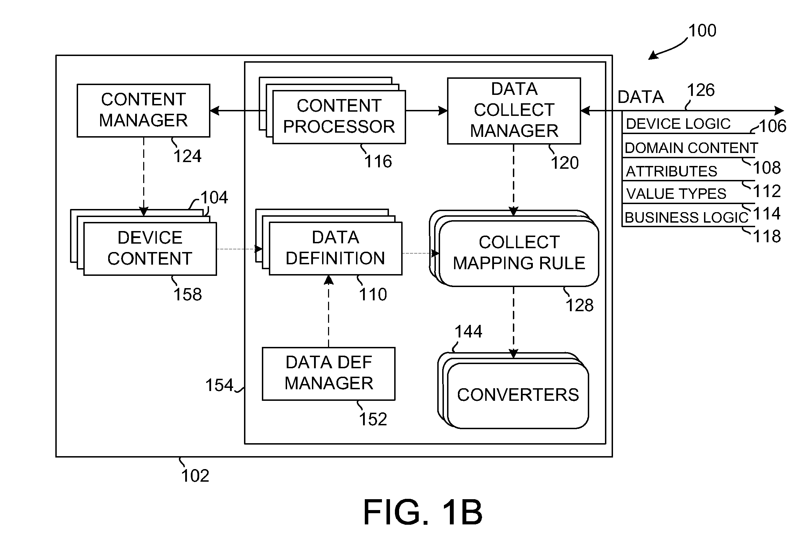

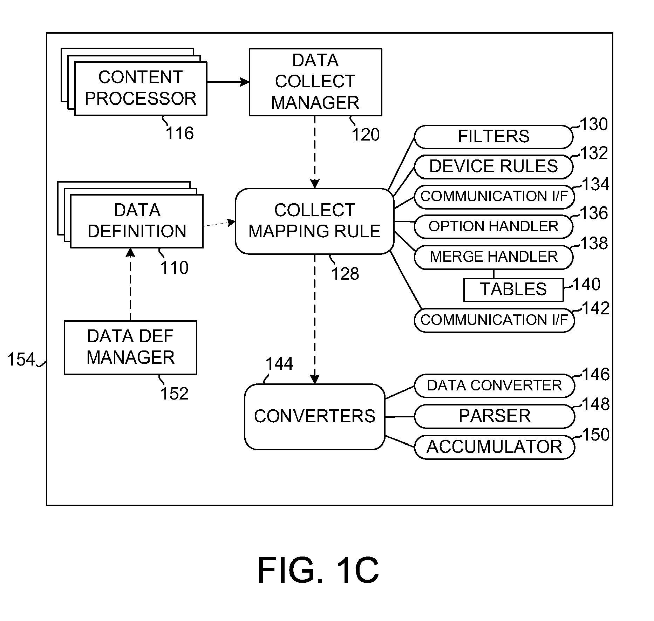

Referring to **FIGUREs 1A****,** **1B****,** and **1C****,** respective basic and more detailed schematic block diagrams show embodiments of a network system **100** that implements network discovery. The network system **100** comprises a discovery subsystem **102** that identifies, enables for consumption, and consumes information. The discovery subsystem **102** is configured to isolate business contents **104** and device-specific logic **106** using modular domain-specific contents **108** and data definitions **110** for normalizing the domain-specific contents **108** and describing attributes **112** and value types **114** that uniquely define domain content independently of a device **122.**

In an illustrative embodiment, the network system **100** can be implemented to include four components, specifically a Core Infrastructure **154,** a Content Processors **116,** Data Definitions **110,** and a Data Collector **120.** The components are loosely coupled and can be isolated, enabling flexible functionality such as that of plug and play and increasing robustness.

The illustrative network discovery system **100** can be implemented with three basic components: Content **104,** DataDefinition **110,** and a Data Collector **120,** each of which can be extensible and dynamically managed by a corresponding manager from a core component. A talker component **158** can be another extensible part of the system **100** that is optional. In practice, a content **104** can handle zero to many data definitions **110.** Each Data Definition can have multiple Collect Mapping Rules based on the number of talkers in place.

A talker **158** is an abstraction of a device or system that gathers data from a particular device or devices. Rules can be specified to enable a selected talker to obtain information from a designated device or devices. Specific rules, for example compliant with an application such as a Smart Messaging Platform (SMP), direct a designated talker to obtain information from a device or devices. The rules can also identify data and data formats of content gathered from the device or devices, which is highly product-specific. Rules can also specify conversion of accessed content.

A talker **158** can be a system or method used to transfer or convey information on a network. Examples of talkers include Hypertext Transfer Protocol (HTTP), File Transfer Protocol (FTP), vendor support protocols such as Simple Network Management Protocol (SNMP), Teletype Network (TELNET), and many others. A talker **158** can be used individually or multiple talkers may be used in combination. Talker functionality is controlled by mapping rules that designate how a particular protocol data collector uses a specific protocol for communicating. A talker operates in compliance with a protocol, the illustrative network discovery system and method enable dynamic changes to mapping rules, facilitating flexibility and trouble-shooting.

The Core Infrastructure **154** addresses the multiple contents that can be deployed in a system and enables a synchronous methodology wherein multiple pieces of the system can operate in concert. The Core Infrastructure **154** links the Content Processors **116** and Data Collectors **120,** enabling communication of Data Definitions **110** between the Content Processors **116** and Data Collectors **120.** Since separate Content Processors **116** exist for each Domain-specific contents **108** and separate Data Collectors **120** exist for each Device-specific contents **156,** the Content Processors **116** can also isolate failures or erratic behaviors of devices easily. Since failure on one content module does not impact others, the illustrative architecture greatly improves the robustness of the entire discovery system.

The Content Processor **116** can support asynchronous communication whereby multiple requests are made without waiting for a response to process additional data. The asynchronous communication pattern ensures every new content processor can consistently attain a suitable level of performance.

The data to be discovered from a Network Device **122** can be modularized into domain-specific contents **108.** Individual domain-specific content **108** is defined by normalized structures called Data Definitions **110.** A data definition **110** contains a list of attributes **112** and value types **114** that uniquely define the domain content **104** independent of the device vendor or model.

The discovery subsystem **102** normalizes domain-specific content 108, enabling creation of content-generic processors **116** that are dedicated to business logics **118** which are generically abstracted independent of specific devices from which data is collected.

A Content Processor **116** calls on the Data Collector **120** to collect from any device the data as specified by a Data Definition **110.** Accordingly, in some embodiments, the discovery subsystem **102** comprises a data collector **120** that can collect data from devices as specified by one or more of the data definitions **110.** The network system **100** can further comprise a content manager **124** configured to issue calls to the data collector **120** for requested data **126.** The content manager **124** shifts functionality from a more typical device basis to data-based operations. Accordingly, the content manager **124** functionality does not depend on specific devices. The content manager **124** calls on the data collector **120** to collect data specified by the data definitions **110.**

The data collector **120** can handle data **126** according to collector mapping rules **128.** In the illustrative network discovery system **100** and associated method, rules are based on data rather than having a device-basis. Examples of data **126** described by collector mapping rules **128** can include one or more filters **130** adapted to select device-specific rules **132** for a designated data definitions **110,** one or more communication interfaces **134** adapted to communicate data over a plurality of protocols, an option handler **136** that can collect data according to selected attributes **112** and priority. Additional data **126** examples addressed by collector mapping rules **128** can include a merge handler **138** that is adapted to merge data collected from different tables **140** of a management information base of a device **122** into a single data definition **110,** and one or more configuration files **142** that defines mapping rules **128** in a selected format.

The filters **130** can be used for implementing mapping laws and defines how to choose which mapping rule to implement in a particular inquiry. Content has a particular format. Each device model has a unique identification that is directly accessible by other devices connected to the network. A content processor accesses data, typically by specifying a physical identifier (ID) in an inquiry to a device. In an attempted content access, a filter can match a system identifier (SYSID) to a mapping rule, thereby allowing or disallowing access to the content.

In some embodiments, the data collector **120** can handle data **126** according to a converter **144** such as, for example, a data converter **146** adapted to transform data from a collected format to a normalized data definition format, a parser **148** adapted to parse a collected data attribute to deduce multiple data constituents, an accumulator **150** adapted to combine at least one collected data value to deduce a single inferred data value, and other converters. The converters **144** normalize data according to the data definitions **110.**

In some implementations or embodiments, the data collector **120** can be configured to handle data according to collector mapping rules **128** and a converter **144** to collect raw device data and return a normalized data definition to a content manager **124.**

The data collector **120** can be configured to create asynchronized application program interfaces (APIs) that enable data collection based on a data definition and callback when the data is collected.

The content manager **124** requests particular information content and dynamically monitors for content from one or more devices or ports. The content manager **124** can access content from aggregated ports or aggregated links. The content manager can dynamically search for existing contact and can have spy functionality.

A network typically connects a very large number of devices. The content manager **124** can discover and identify content for individual devices connected to the network, determining all types of content supported in a network device. The content manager **124** can access data according to classification and classify the data according to various characteristics such as device attributes, data attributes, device, schedule number, internet protocol (IP) address on a device, and subnet to which a device belongs. The content manager **124** can further access and classify data according to layer 2 content, ports on a device, physical device such as controller, processor, or central processing unit (CPU), and others. The content manager **124** can select a particular device as active for supplying content while maintaining other devices in a stand-by mode. The content manager **124** can also determine differences between protocol of one device and another, enabling aggregation of content in different formats.

In some embodiments, the discovery subsystem **102** can further comprise a data definition manager **152** that is configured to manage data definitions **110** through operations including, for example, loading data definitions, locating data definitions for a specific data collection request, manipulating a data definition table using set and get operations, converting data types, and the like.

A data definition manager **152** controls abstraction of data, for example by normalizing the data. The data definition manager **152** manages data definitions, for example by adding, modifying, or deleting data definitions. In some embodiments, extensible Markup Language (XML) can be used to specify data definitions, although other structures can be used. A data definition is an abstraction of content. An individual content can have one or more data definitions that are independent of a device from which the content is collected. A data definition can be associated with one content or many and enables multiple types of content.

A data collection manager **120** can be implemented as a detailed logic that uses mapping rules to map content to a device. The data collection manager **120** enables usage of multiple selectable options that specify how to collect data and also enables the options to be prioritized. The options enable data to be collected from multiple devices. The data collection manager 120 enables specification of multiple options for data collection, directing an inquiry to a particular device according to the specified options. If data collection fails for the device, the data collection manager can redirect the inquiry to another device. The options specify how the inquiry is directed to a device, for example by specifying the format of a request or directing normalization of the data so that a content manager can appropriately handle the inquiry and data. An option can specify that data conversion is mandatory or optional for a particular inquiry. Data can be converted in a manner specific to a device and to the specified data definition.

Individual network users, devices, and content are typically different. The data collection manager **120** facilitates activation and inactivation of content in a manner that handles the differences.

A data definitions **110** can specify collector mapping rules, thereby defining data to be collected in an inquiry. The collector mapping rules can be implemented according to a table name, along with names or other designation of rows and/or columns in the table, specifying data rules for a device or devices. The mapping can define for each device the selected way to acquire data. For the example of a Cisco device, the data collection manager can specify a table name and column allocated to particular data. The illustrative system enables modification, addition, or deletion of mapping rules.

Some devices can support multiple types of data. A mapping definition determines how to handle the different data types.

A converter **144** can be included to enable conversion of content from one form to another. For example, for a device a table may return data in a string format while a request may specify return of the data in a different format. The converter can convert the content format, collate data, or make other changes in data presentation. The converter **144** can be optional in various implementations or in some conditions. For example, for a particular attribute a device can function consistently without conversion. The converter **144** is typically used when content is different from what a requesting devices expects to receive. In an illustrative embodiment, the converter is typically invoked automatically.

In an example of operation of the data collection manager **120,** content for a device can be compliant with a specific protocol and can be requested for usage by another device that processes a different protocol. A collector mapping rule can be created that specifies ways to collect data for different devices, for example designating a table and column in the table. Format may be different for data as accessed and as desired so that the converter can be used to return data in the appropriate format.

The data collection manager **120** enables the creation of new collector mapping rules and conversions as new devices and content formations become available. Accordingly, the usage of collector mapping rules creates flexibility, enabling new functionality without change to structural aspects of the system.

In an example discovery methodology, a device upon which content discovery is directed has a list of deployed content. A requesting device can access the content lists in a device-by-device manner and examine the content lists to trigger data collection, returning information such as a system identifier (SYSID). Basic information, once accessed, is passed for each content in a device and passed to the content manager **124.** If the device does not support a type of content, the mapping rule is implemented to ignore the content. For all components, templates are supplied, specifying behavior of the component.
The template defines the structure of a content mapping rule and supports normalization of data to a data definition.

The discovery subsystem **102** enables creation of a content processor 116 that can request multiple data definitions concurrently. The data collector 120 assembles normalized data and feedback to the content processor 116 to improve data gathering performance.

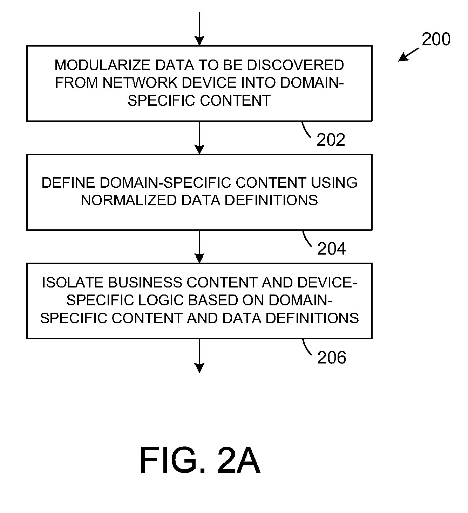

Referring to **FIGUREs 2A** through **2J**, several flow charts depict embodiments of automated methods for network discovery. An illustrative network discovery method **200** is shown in **FIGURE** 2A and comprises modularizing **202** data to be discovered from a network device into domain-specific content and defining **204** the domain specific content by normalized data definitions. Business content and device-specific logic can be isolated **206** according to the modularized domain-specific content and the data definitions.

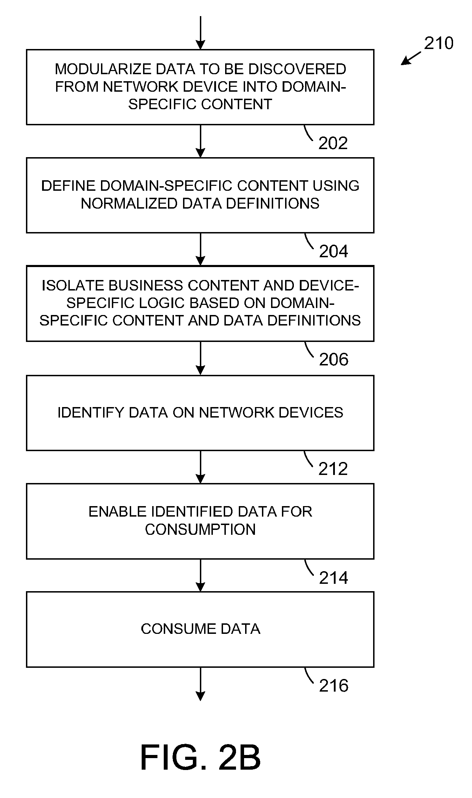

**FIGURE 2B** illustrates an embodiment of a network discovery method **210** that can further comprise identifying **212** data on one or more network devices, thereby enabling **214** the identified data for consumption, then consuming **216** the data.

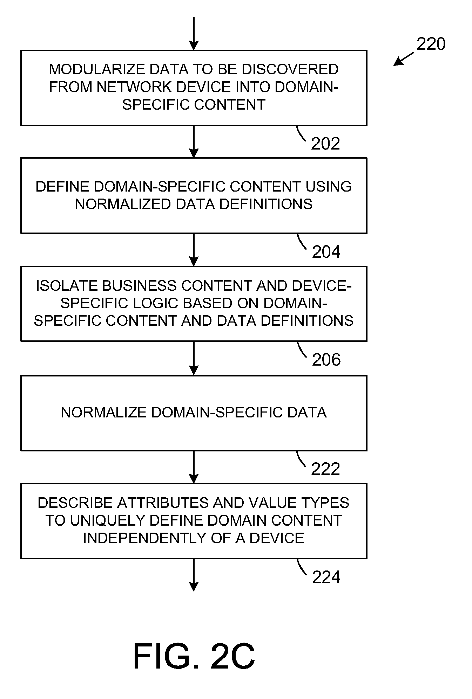

**FIGURE 2C** shows an embodiment of a network discovery method **220** that can further comprise normalizing **222** the domain-specific contents, and describing **224** attributes and value types that uniquely define domain content independently of a device.

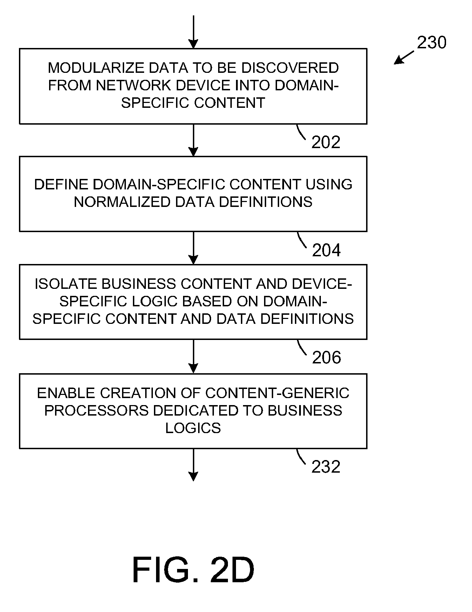

**FIGURE 2D** shows an embodiment of a network discovery method **230** that can further comprise enabling **232** creation of content-generic processors that are dedicated to business logics which are generically abstracted independent of specific devices from which data is collected.

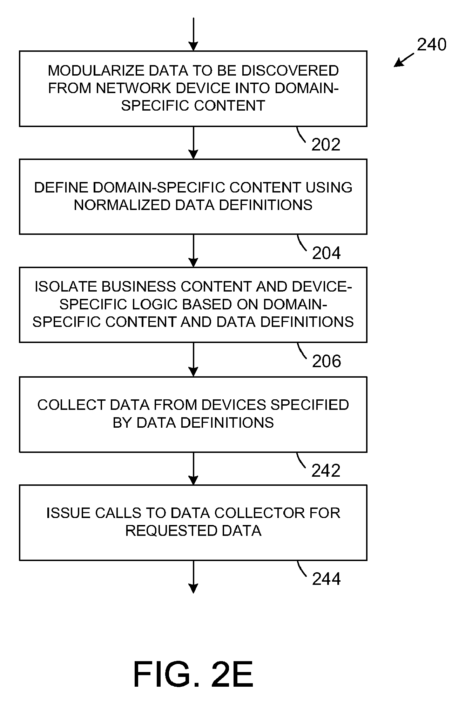

Referring to **FIGURE 2E****,** another embodiment of a network discovery method **240** can further comprise collecting **242** data from devices specified by one or more data definitions and issuing **244** calls to the data collector for requested data.

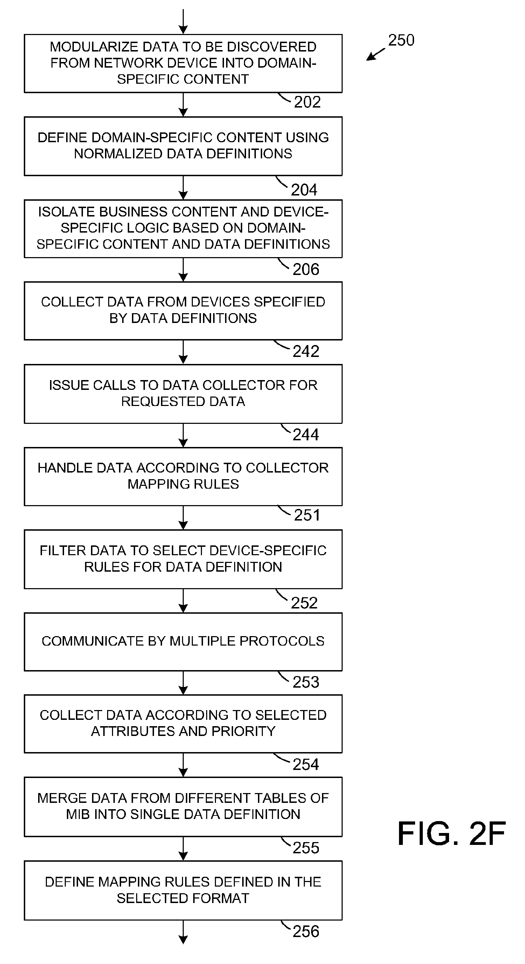

**FIGURE 2F** depicts an embodiment of a network discovery method **250** that can further comprise handling **251** data according to collector mapping rules, filtering **252** data to select device-specific rules for a designated data definition, and communicating **253** data over multiple of protocols. Data can be collected **254** according to selected attributes and priority. Data collected from different tables of a management information base (MIB) of a device can be merged **255** into a single data definition. Mapping rules are defined **256** in a selected format.

The Data Collector employs the extensible concept of Collector Mapping Rules for each Data Definition and an automatically-invoked converter 144 that conforms content to a format expected by a requesting device.

The Collector Mapping Rules enable several useful features. For example, filters can be constructed that select device specific rules for a particular Data Definition. The Collector Mapping Rules enable talkers to use alternate protocols such as Simple Network Management Protocol (SNMP), Teletype Network (TELNET), Hypertext Transfer Protocol (HTTP), and others to communicate with the device. Collector Mapping Rules also can support potential options on the device for collecting the same attribute and the priority for considering one option over another. The mapping rules also can enable merging of data collected from different tables of the management information base in the device into a single data definition. Other rules support configuration files to define the mapping rules in extensible Markup Language (XML) format.

To enable extensible support for new device and content discovery, design patterns are supplied to implement Content Processors, Data Collectors and Data Definitions. The patterns enable creation of the standard interfaces, abstract classes, and utilities that can expedite the support delivery process. The Core framework automatically stitches the artifacts for the new content support into the discovery system.

The illustrative network discovery methods enable new device support for an existing content in a highly simplified manner since only a limited update to the Data Collector is used. Such an update can be performed by actions as minimal as adding a mapping rule in the configuration file or installing or plugging in a new converter if the default Converter cannot meet the needs of data transformation.

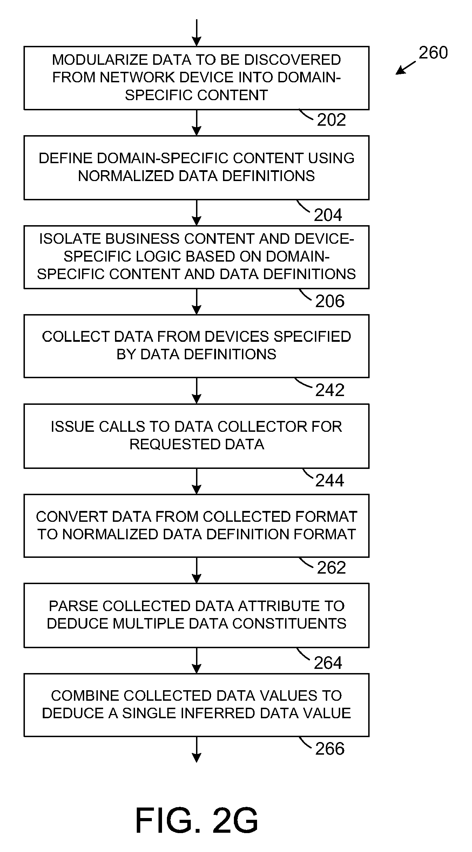

**FIGURE 2G** shows an embodiment of a network discovery method **260** that includes operation of a Converter. The Converter enables transformation of the data from the collected format to the normalized Data Definition format and parsing of a single collected data attribute to deduce multiple data constituents. One or more collected data values can be processed to deduce a single inferred data value. The Converter also enables more sophisticated interaction with the core infrastructure. Accordingly, the network discovery method **260** can further comprise converting **262** data from a collected format to a normalized data definition format, parsing **264** a collected data attribute to deduce multiple data constituents, and combining **266** one or more collected data values to deduce a single inferred data value.

Thus the Data collector employs the Mapping Rules and Converters to collect raw device data and return the normalized Data Definitions to the Content Processors.

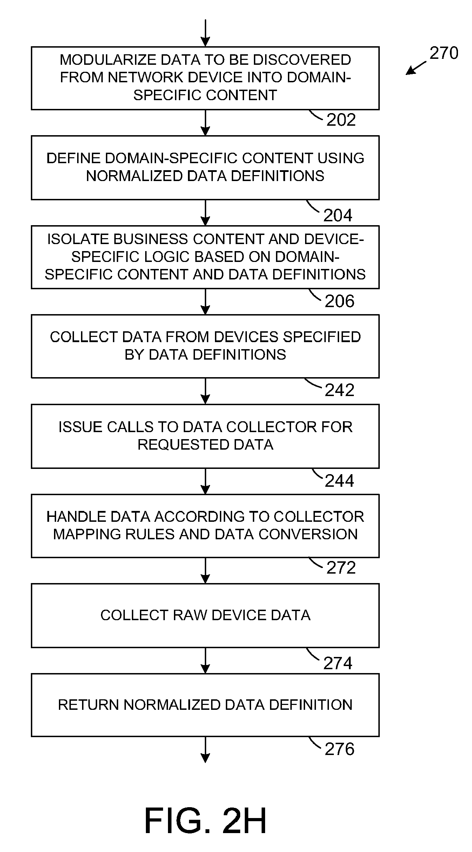

Referring to **FIGURE 2H****,** another embodiment of a network discovery method **270** can further comprise handling **272** data according to collector mapping rules and data conversion, collecting **274** raw device data, and returning **276** a normalized data definition.

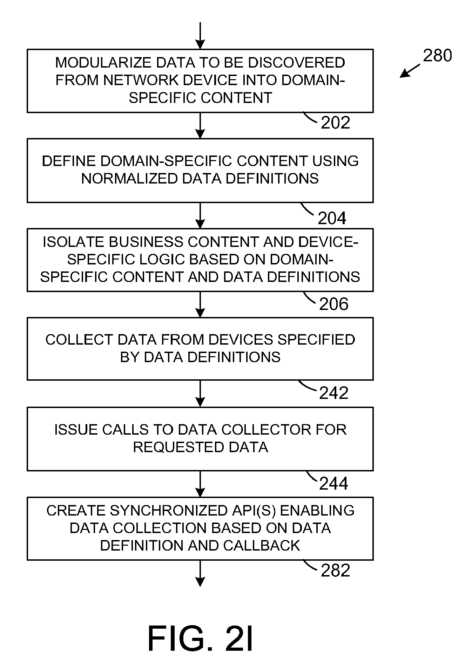

**FIGURE 2I** shows an embodiment of a network discovery method **280** that can further comprise creating **282** asynchronized application program interfaces (APIs) that enable data collection based on a data definition and callback when the data is collected.

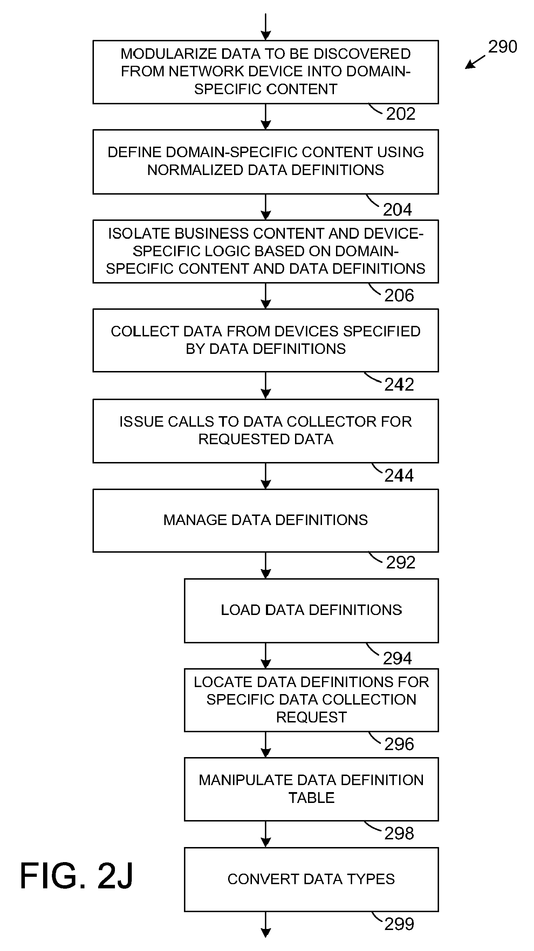

Referring to **FIGURE 2J****,** another embodiment of a network discovery method **290** can further comprise managing **292** data definitions. Examples of data definition management operations can include loading **294** data definitions, locating **296** data definitions for a specific data collection request, manipulating 298 a data definition table using set and get operations, converting 299 data types, and the like.

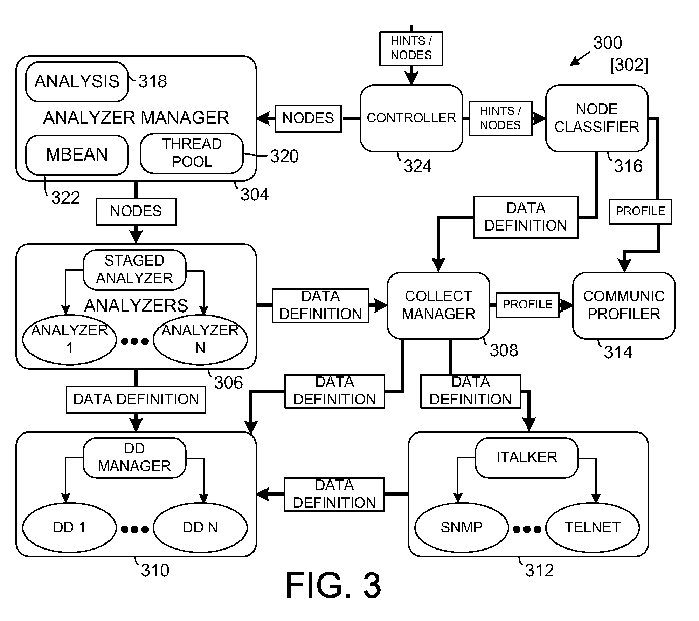

Referring to FIGURE 3, a schematic block diagram illustrates a snapshot of an embodiment of an analyzer infrastructure 300 in an overall discovery architecture 302. Other components in a discovery subsystem can be added in various embodiments of other embodiments of an analyzer infrastructure.

The illustrative analyzer infrastructure 300 comprises four components including an Analyzer Manager **304,** Analyzers **306,** Collect Manager 308, and DataDefinition Manager 310. The Analyzer Manager 304 corresponds to the Content Manager 124 and the Analyzers 306 correspond to content processors **116** shown in **FIGURE 1B****.** Another component of the analyzer infrastructure 300 that can be implemented in a network management system comprises talkers 312. A communication profiler 314 operates to portray a communication capability for discovery targets and can be configured as a shared component between a Node Classifier 316 and Collect Manager 308.

The illustrative Analyzer Manager 304 has three predominant features including an Analysis block **318** to specify the analyzer dependency, a ThreadPool 320 for staged analyzers, and MBean 322 for instrumentation and supportability. One feature, high availability, can be implemented in the Analyzer Manager 304 or in a Controller 324. The infrastructure 300 can be implemented to support domain services.

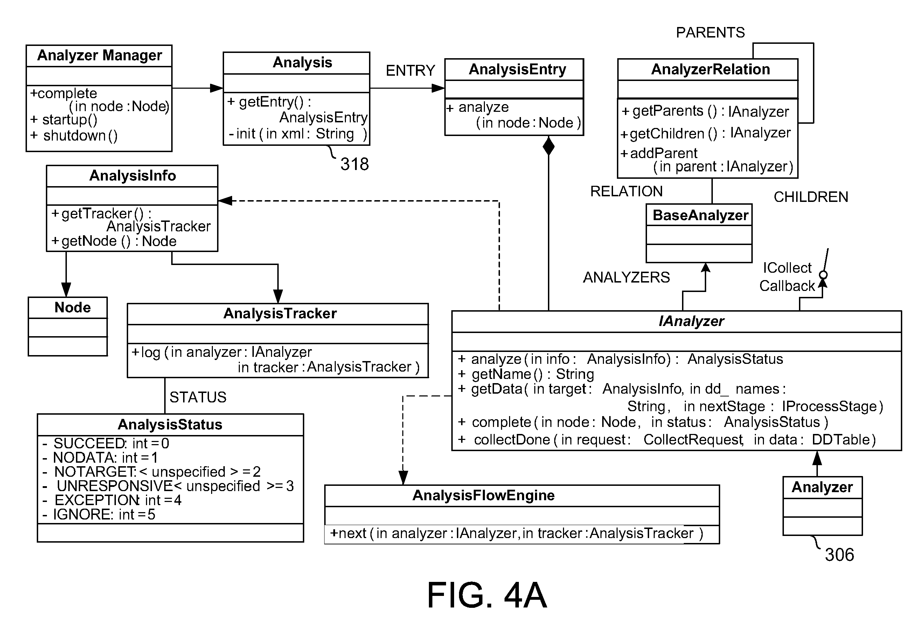

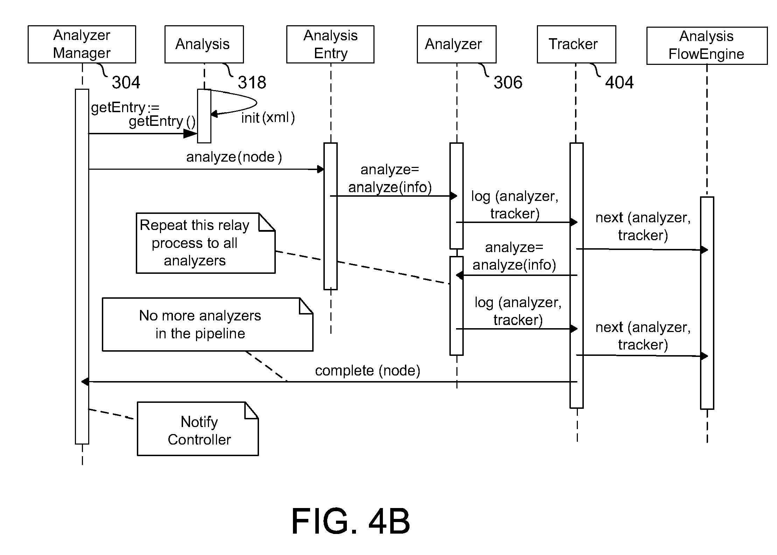

Referring to **FIGURE 4A****,** a class diagram illustrates an embodiment of Analysis 318 and describes interactions with Analyzers 306 to manage dependency and streamlined discovery. FIGURE 4B shows a simple sequence diagram for Analysis 318 that describes an example technique for analyzing a node.

At Analyzer Manager **304** start up time, the Analysis Manager **304** calls an initialization (init) method to construct the Analysis **318,** which in turn reads in an Analysis configuration XML file, instantiate each Analyzer **306,** set the parents/children relationship in IBasicAnalyzer according to the configured dependency. The Analyzer Manager **304** also instantiates a PipelineEntry with the start point analyzers, which do not have dependency on other analyzers.

As the nodes flow in the Analyzer Manager **304,** the Analyzer Manager **304** calls Analysis **318** to obtain the entry point to analyze the node. Iteratively, the Analyzer Manager **304** calls all start point analyzers to analyze the node. Once Analyzer **306** completes analysis, Analyzer Manager **304** calls AnalysisTracker **404** to log status of the analysis associated with the node.

Possible status can be SUCCEED, NODATA, EXCEPTION, and IGNORE. SUCCEED status indicate the analysis completes successfully. The analysis is passed over to those analyzers downstream of the pipeline that depend on the analysis. NODATA status indicates the analysis does not complete successfully due to inability to obtain necessary data, for example because the node is not responsive to the talk response. Analysis does not continue for the node to analyzers downstream of the pipeline that depend on the analysis. EXCEPTION status indicates all kinds of exceptions caught during the analysis. The analysis does not continue for the node to analyzers downstream of the pipeline that depend on the analysis for the EXCEPTION status. IGNORE status indicates the analyzer did not handle the node and is filtered out at the beginning of analysis. Each analyzer should evaluate operational capability against a filter or filters before actually collecting data.

Analysis status is used by a tracker to determine whether the node should be passed on to the next set of downstream analyzers. In the condition that current analysis is a success and the dependencies of a child are also completed successfully, the analysis can be activated on the child in the calling next() to PipelineFlowEngine class. If no children are available, the analysis simply stops against the node.

For each analyzer, ThreadPool can be split into multiple stages by aligning the collect data actions pertained to DataDefinition(s). Detail information regarding how to decouple the analyzer is further described in the Staged Analyzer section hereinafter. Each stage can be a standalone Runnable procedure that can be executed concurrently with a shared threadpool in the analyzer infrastructure. A threadpool util can be used to instantiate a ThreadPool with a configurable initial and maximum pool size. An unlimited queue can be recommended for the threadpool.

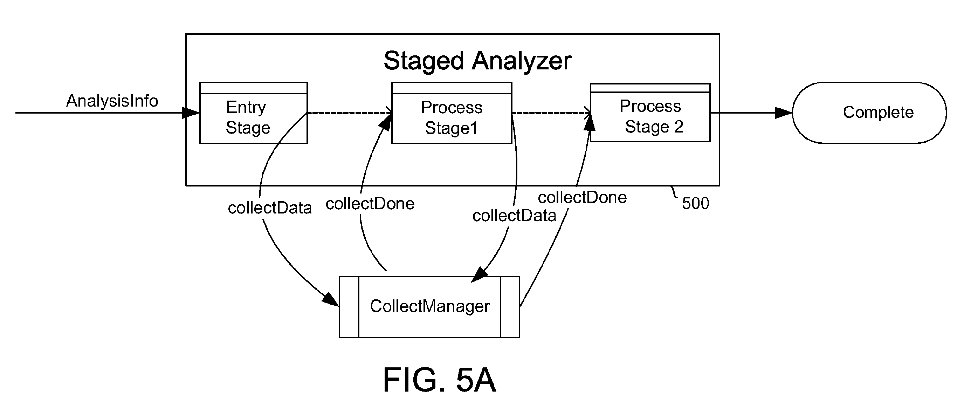

Referring to **FIGURE 5A****,** a schematic block diagram illustrates an embodiment of a Staged Analyzer **500.** The discovery Staged Analyzer **500** uses event-driven design pattern by splitting each analyzer into sequential stages. Each stage is driven by data request or/and data processing events as depicted in **FIGURE 5A****.** The DataDefinition (DD) and node analysis information are the events that drive the analysis flow from one stage to another until the whole analysis is fully completed.

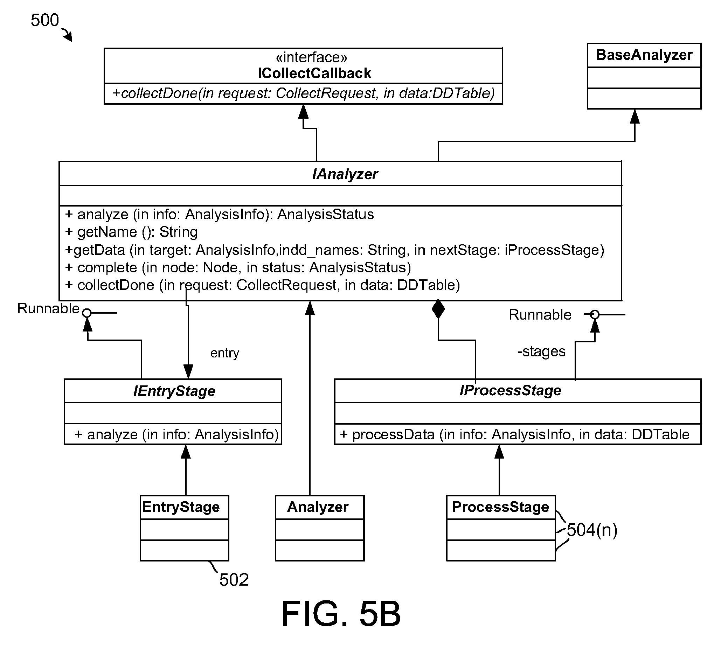

**FIGURE 5B** depicts an embodiment of a class for the Staged Analyzer **500.** To implement a new analyzer, the developers simply fill in the business content in classes EntryStage **502,** Analyzer, and various ProcessStages **504(n)** facilitated by the common functionalities supplied by the infrastructure classes. The infrastructure seamlessly stitches the business content together.

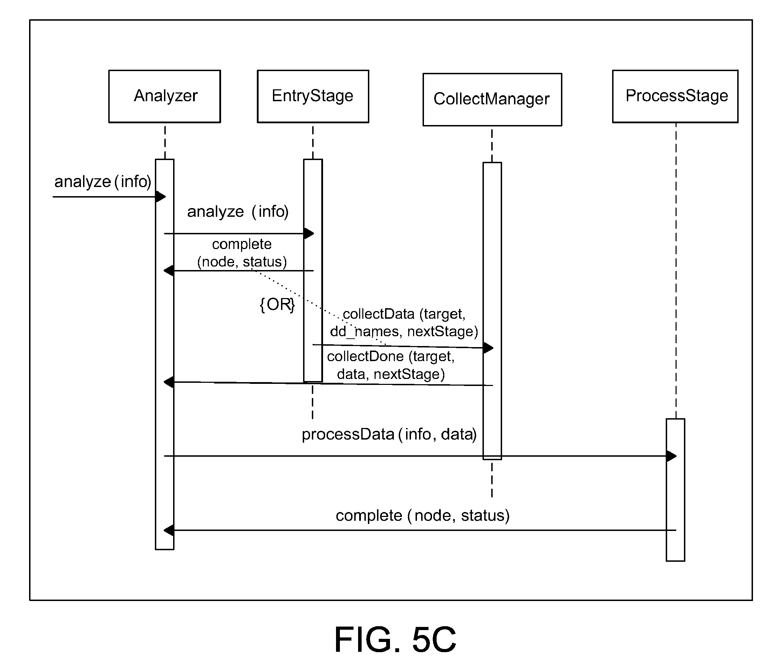

Referring to **FIGURE 5C****,** a simple sequence diagram is shown for an analyzer that processes the node analysis. The analysis can complete at any stage, either succeed or failed. For instance, the analyzer may not qualify to handle the type of node, did not get data back from collect manager, or other unexpected exceptions. For these circumstances, the analyzer still notifies the tracker the analysis has completed earlier than normal analysis. Once an analysis has issued the complete status, the whole analysis should stop immediately.

The number of stages from analyzer perspective is not controlled so that, the more stages, the slower the analyzer. A developer can manage to reduce as many stages as possible, for example by combining multiple DataDefinitions in one collect request if the DataDefinitions have no internal dependencies or sequential reliance. For example, NodeClassifier can combine IfTable and IfxTable in one stage because the tables are collated and a stage can process both of data without regard for arrival sequence.

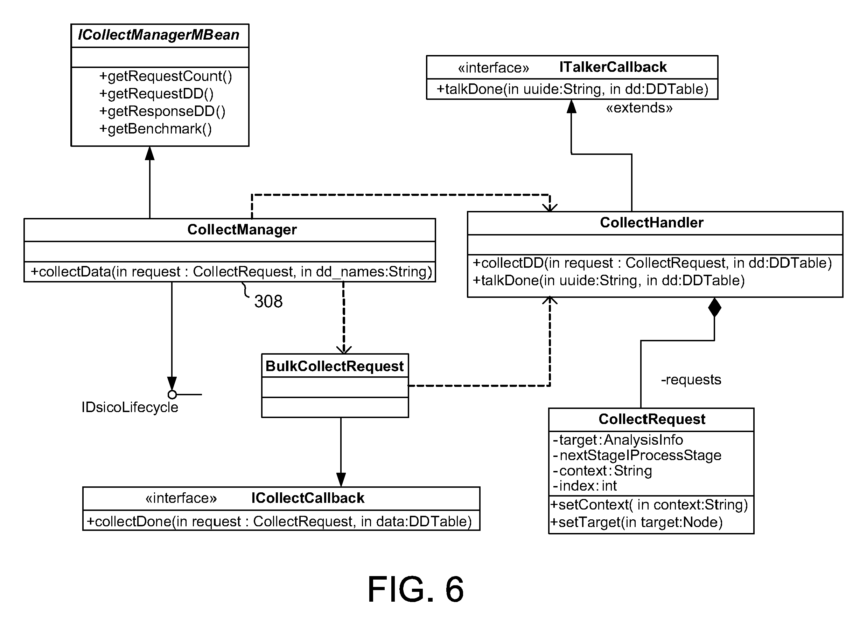

Referring to **FIGURE 6****,** a simple class diagram illustrates an embodiment of the CollectManager **308.** In a configuration wherein a talker component is shared across NMS subsystems, an individual collector associated with specific contents/talker pair to transform the data format is not necessary. CollectManager **308** can supply asynchronized Application Programming Interfaces (APIs) for a consumer to collect data based on the predefined DataDefinition, and callback to the consumer once all data have been collected from talkers. CollectManager **308** can also form a request to collect DataDefinition in bulk mode and can sort the results based on the order in the previous request so that the results returned back to the analyzer is in predetermined mode. CollectManager **308** can supply basic instrumentation to the DD request and response by MBean and direct the request to the appropriate talker transparently as facilitated by the communication profiler.
The CollectManager **308** need not attempt another talker if one talker has failed and does not need a configurable order for a manager to retry.

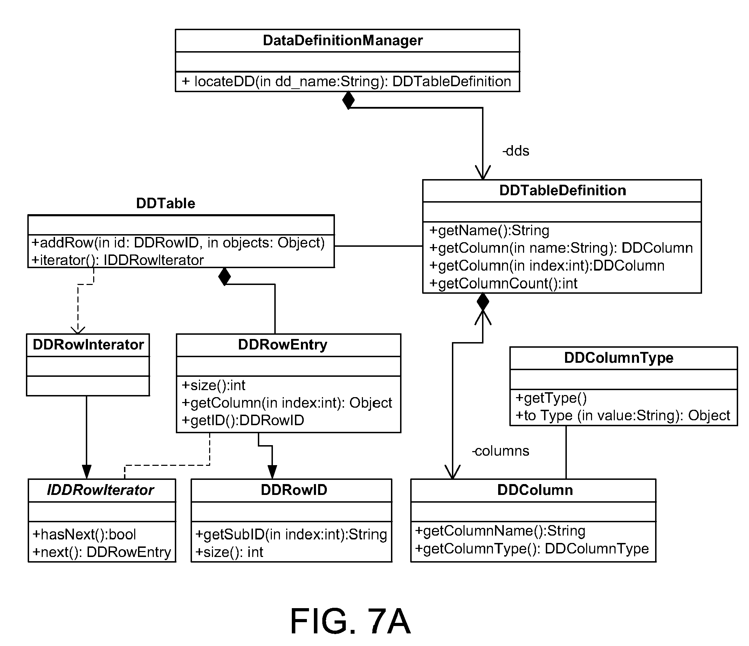

Referring to **FIGURE 7A****,** a class diagram depicts a DataDefinition for an embodiment of a DataDefinition Manager. The DataDefinition Manager is responsible to manage all DataDefinitions delivered in the Discovery subsystem. Management actions include loading delivered DataDefinitions from the system. The original format of DataDefinition can be in XML format packaged with component or out-of-box contents support. Other management actions can include locating the DataDefinition for a specific data collection request, manipulating the DataDefinitionTable (DDTable) such as with Set/Get operations, and facilitating the data type conversion for specific column value.

In various embodiments, individual talkers can be made responsible for managing policy for new devices. Individual talkers can have unique characteristics, for example a SNMP talker expects object identifiers (OIDs) from the policy, a TELNET talker expects telnet script from the policy, and an Internet Control Message Protocol (ICMP) talker expects nothing from the policy.

**FIGURE 7A** depicts the classes for implementing the RowSet and DataDefinition. Other classes can be implemented according to characteristics of the interface with the common talker component.

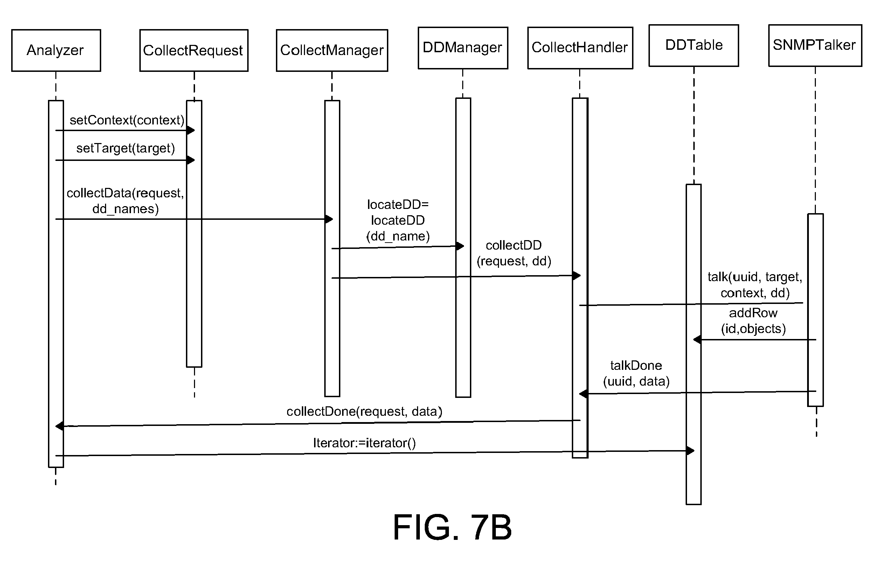

For an analyzer, an example of a simple sequence diagram to use DataDefinition to collect and process data from SNMP Talker is shown in **FIGURE 7B****.**

An analyzer first constructs a CollectRequest, which contains target, next stage, context, or index information that can be used by the talker and collect manager. Then the analyzer sends the request and associated DataDefinition names to the CollectManager, that looks up the DataDefinition and returns back the DDTable. The request is forwarded to CollectHandler and further relayed to the specific talker based on the profile information in the Communication Profiler. In the illustrative case, SNMPTalker asynchronously talks to the target, gets the MIB values, and adds the values into the DDTable as contents callbacked to the CollectHandler. Finally CollectHandler notifies analyzer when the data is ready for processing.

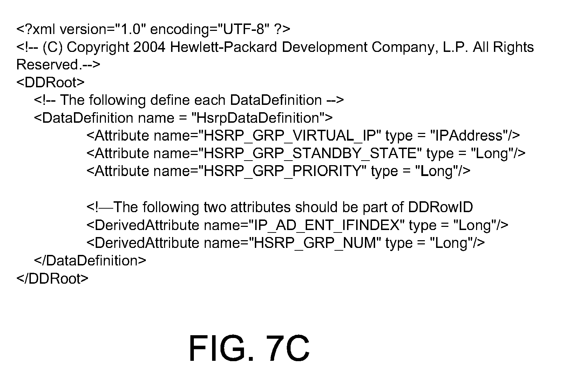

**FIGURE 7C** illustrates an embodiment of code for a sample out-of-box DataDefinition for XSRP.

For an SNMP talker, valuable information can be embedded in the returned instance suffix as index. For example, the ifindex and HSRP group number are returned only in the OID suffix in HSRP member query and are not directly readable from any MIB value. SNMP Talker places the OID suffix in DDRowID, and the analyzer interprets the DDRowID content if available. Various talkers may use the DDRowID and, if used by many talkers, a collector can be implemented to handle DDRowID.

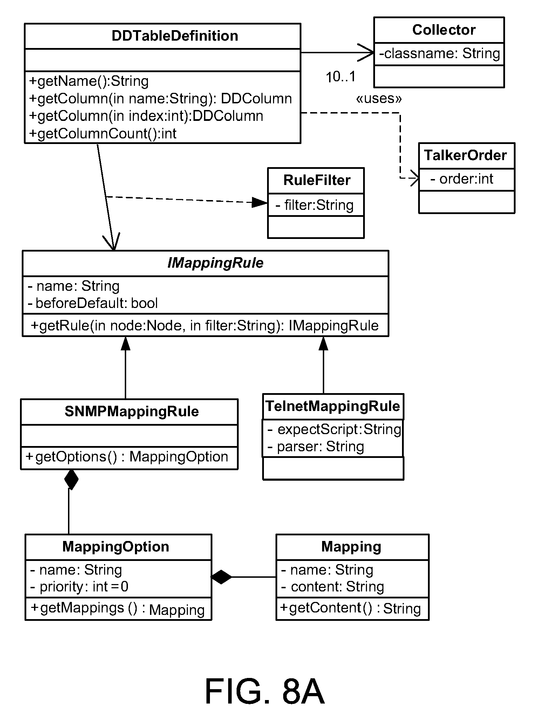

Referring to **FIGURE 8A****,** an initial draft class diagram depicts an example of a DataDefinition (DD) Mapping Rule. The DD mapping rule is used together with the DataDefinition to supply a definition to enable a talker to retrieve vendor/device specific data in a term of a DataDefinition. The DD mapping rule and DataDefinition also enable off-cycle extensibility to add new device support, a capability to interrogate with multiple SNMP MIBs based on the priority until finding the expected data, and a capability to interrogate with multiple SNMP MIBs in augmented mode and consolidate the data. THe DD mapping rule and DataDefinition also enable dynamic data transformation by specifying an attribute converter so that the analyzer can handle the collected data in non-vendor-device specific format.

For a particular DataDefinition, only one satisfied mapping rule is in one talker. However, other satisfied mapping rules can be in other talkers if so configured. Other implementations may have other correspondence between mapping rules and talkers.

In each MappingRule subclass one reserved mapping rule, named as 'DEFAULT', can be configured. The rule can specify the null filter so that the rule applies to all targets by default. The rule can be configured to run either before or after other rules.

One satisfied SNMPMappingRule can have a few alternative mappings, named MappingOption, which can be exercised to collect data in the order based on relative priority value. If one MappingOption fails, another can be attempted until the expected data is received or no additional MappingOption remains so the relation among list of MappingOption is in OR mode. Each MappingOption can have a list of Mappings that are in AND mode so all mappings are exercised to collect data and the received data is merged.

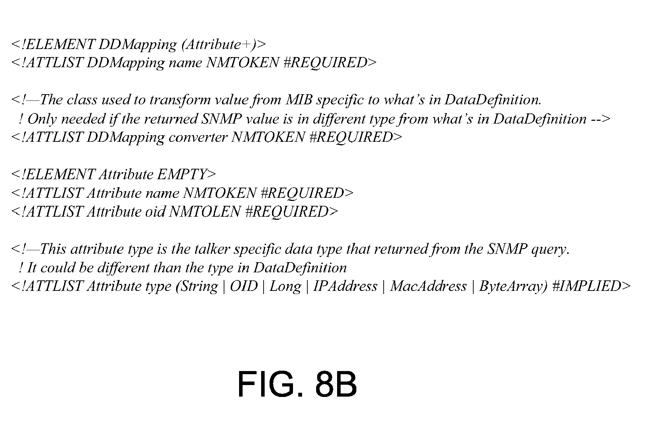

**FIGURE 8B** is a table that depicts content in each Mapping as an XML String. The mapping rules, with the contents shown in **FIGURE 8A****,** can be stored separately from the DataDefinition. A final persistence target can be stored in ObjS, but in short term may be saved in an XML file. Consumers can configure the mapping rule for a specific DataDefinition by referencing the name of DataDefintion which is globally unique.

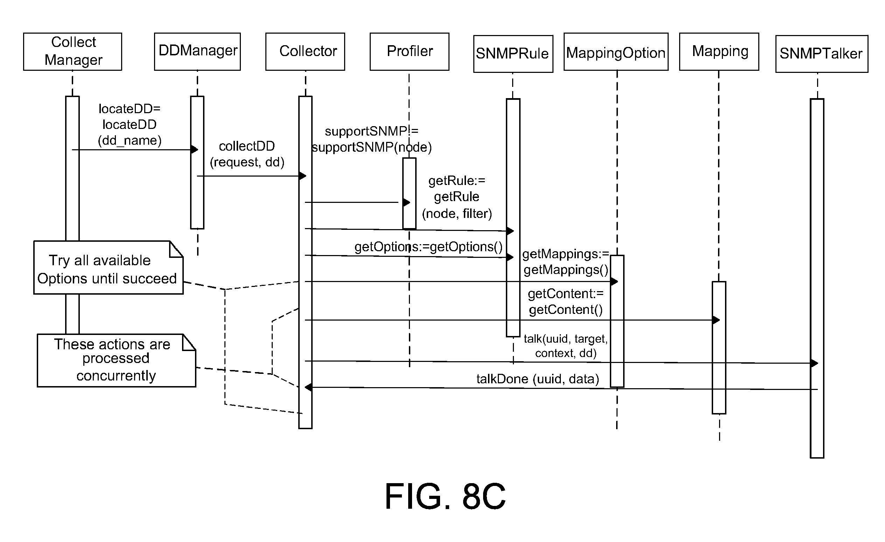

A sequence diagram is shown in **FIGURE 8C** that describes how mapping rules are involved in the discovery process.

If a target can use both SNMP and TELNET talkers, the rules can be in OR mode and an order to try is based on the value configured in TalkerOrder class.

Collector and SNMP talker contracts can define interactions. An attribute defined in the DataDefinition can have a different SNMP value type when mapped, a condition that can be addressed through usage of a converter class. No strict requirement is imposed that all attributes in the DataDefinition are mapped in all mappings. The DataDefinition can contain superset data from supported vendor/device so the collector passes the XML content in the mapping down to the SNMP talker so that SNMP talker knows the exact list of columns and column value types to query in the SNMP request.

SNMPTalker, upon receiving the XML content, converts the XML string into the SNMPColumnDef data structure which can be used directly by SNMPStack. The ColumnEntry can be LongColumn, StringColumn, OIDColumn, IPAddressColumn, ByteArrayColumn, all of which are defined in SNMPStack. SNMPColumdef can have the form:
*-name: String*
*- column: ColumnEntry*

SNMPTalker, upon receiving the SNMP result, transforms the column value into the type defined in the DataDefinition by invoking the lConverter interface. Once all data are filled in the DDTable, SNMPTalker calls back the collector. ISNMPConverter can have the form:
*+convert(in from: ColumnEntry, in mapping:Mapping): DDRowEntry.*

A suggested call from Collector to SNMPTalker can be:
*Void talk(Collector collector, Target target, String dd_name, String content)*
*Void talk(Collector collector, Target target, SNMPContext context, String dd_name, String content)*

A suggested call from SNMPTalker to Collector can be:
*Void talkDone(DDTable table, TalkerStatus status)*
   TalkerStatus class can hold the status of the request, which could be UnResponsive, NoTarget, IOException, or the like.

A RuleFilter can be used as part of a mapping rule methodology which evaluates a target and returns a valid MappingRule for talker to talk. Syntax of a filter string can be:
*Filter::= Expression{LogicOper Filter}*
*Expression ::= Name Operator value*
*LogicOper ::= 'and'*| *'or'*
*Name ::= 'OID'*
*Operator::*= '='|'!='|'>'||'>='||'<'||'<='|'>>'|'<<'|'<>'

An example filter string can be: "OID >> .1.3.6.1.4.1.11" for example for a Hewlett-Packard device. Operator '>>' means "starts with". Operator '<<' means "ends with". Operator '<>' means "contains".

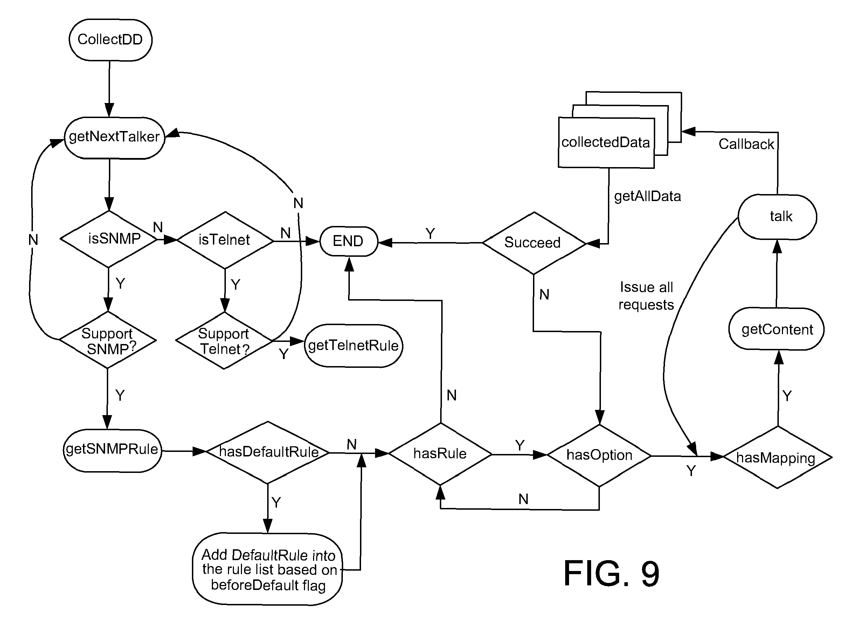

Referring to **FIGURE 9****,** a diagram shows an example of a Data Flow to collect data for a node. Many data mapping rules can be implemented in the collector component. For each DataDefinition, an optional TalkerOrder class exists that defines for the DataDefinition which talker can be tried first. If SNMP, the talker continues to check whether the node supports SNMP. If not, a next talker is attempted.

If SNMP is supported by the target node, a rule is filtered that satisfies the Node properties. If a DEFAULT rule is configured, the default rule is added into the optional rule list and sorted in the order based on the value of before Default flag. A maximally of two satisfied rules can be implemented in which one is the DEFAULT.

For each rule, data flow can start with MappingOption, which sorts based on priority. For each MappingOption, the collector concurrently talks with SNMPTalker with the available Mappings configured. Once all requests are returned from the Talker and at least one talk succeeds, configuration ends. Otherwise, the collector attempts the next available MappingOption until no more remain. Then the collector attempts the next available rule until no more remain.

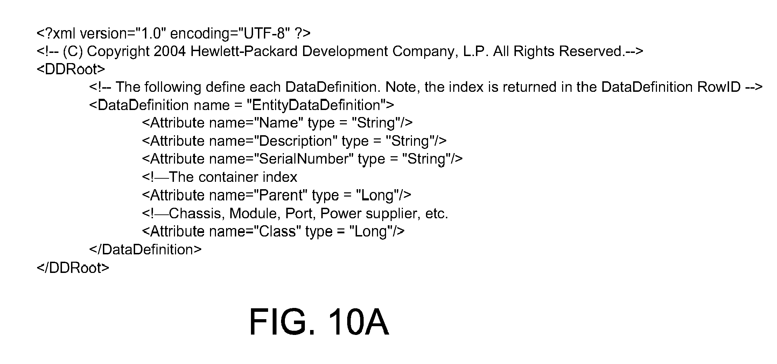

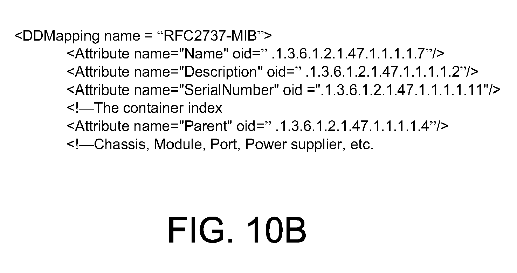

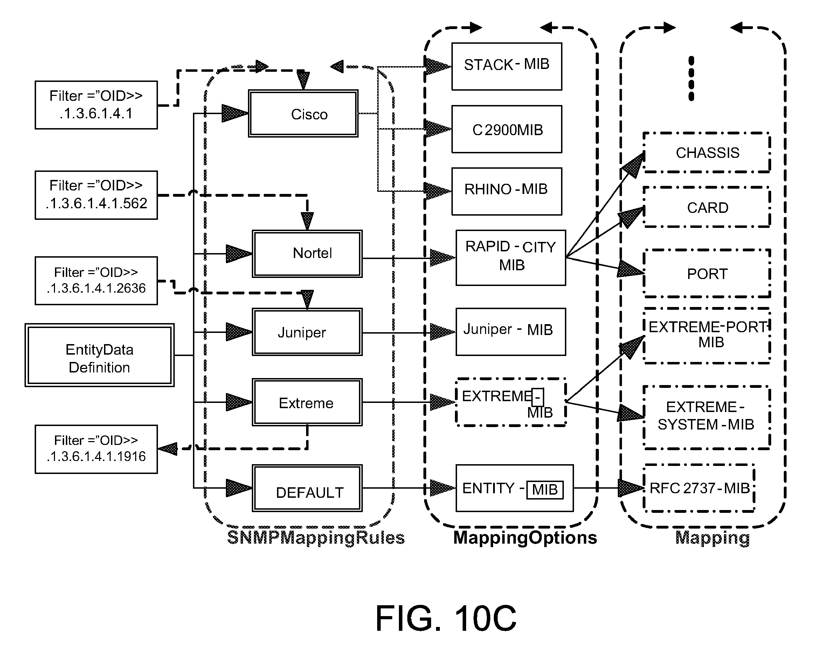

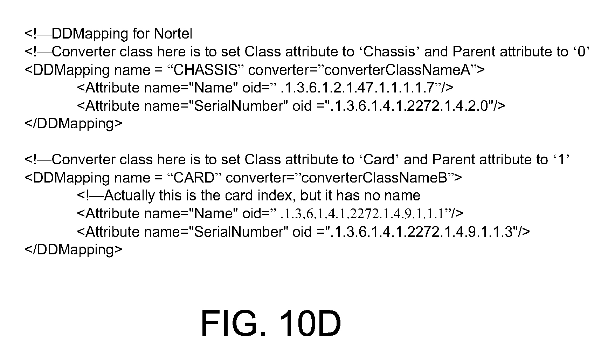

Referring to **FIGUREs 10A** and **10B****,** tables show examples of a DataDefinition for a physical component, demonstrating an example of how the DataDefinition and Mapping Rules can be developed when adding a new content or extending a new device. **FIGURE 10C** is a schematic block diagram that shows an example of the structure of overall mapping rules. Mapping rules can be isolated per vendor, by use case per protocol such as XSRP; or even mixing the vendor protocol. For example for Cisco devices, various MappingOptions may be attempted until expected data is received. For some extreme devices, entity data can be collected from two different mappings and the final data can be a convergence of both. **FIGURE 10D** is a table showing an example that illustrates only definition of mapping contents for Nortel and RFC2737 mapping rules.
There has been described an automated method for network discovery comprising: modularizing data to be discovered from a network device into domain-specific content; defining the domain specific content by normalized data definitions; and isolating business content and device-specific logic according to the modularized domain-specific content and the data definitions.
There has been described a method further comprising: identifying data on at least one network device; enabling the identified data for consumption; and consuming the data.
There has been described a method further comprising: normalizing the domain-specific contents; and describing attributes and value types that uniquely define domain content independently of a device.
There has been described a method further comprising: enabling creation of content-generic processors that are dedicated to business logics which are generically abstracted independent of specific devices from which data is collected.
There has been described a method further comprising: collecting data from devices specified by at least one data definition; and issuing calls to the data collector for requested data.
There has been described a method further comprising: handling data according to collector mapping rules; filtering data to select device-specific rules for a designated data definition; communicating data over a plurality of protocols; collecting data according to selected attributes and priority; merging data collected from different tables of a management information base of a device into a single data definition; and defining mapping rules in a selected format.
There has been described a method further comprising: converting data from a collected format to a normalized data definition format; parsing a collected data attribute to deduce multiple data constituents; and combining at least one collected data value to deduce a single inferred data value.
There has been described a method further comprising: handling data according to collector mapping rules and data conversion; and collecting raw device data and returning a normalized data definition.
There has been described a method further comprising: creating asynchronized application program interfaces (APIs) that enable data collection based on a data definition and callback when the data is collected.
There has been described a method further comprising: managing data definitions comprising: loading data definitions; locating data definitions for a specific data collection request; manipulating a data definition table using set and get operations; and converting data types.

The various functions, processes, methods, and operations performed or executed by the system can be implemented as programs that are executable on various types of processors, controllers, central processing units, microprocessors, digital signal processors, state machines, programmable logic arrays, and the like. The programs can be stored on any computer-readable medium for use by or in connection with any computer-related system or method. A computer-readable medium is an electronic, magnetic, optical, or other physical device or means that can contain or store a computer program for use by or in connection with a computer-related system, method, process, or procedure. Programs can be embodied in a computer-readable medium for use by or in connection with an instruction execution system, device, component, element, or apparatus, such as a system based on a computer or processor, or other system that can fetch instructions from an instruction memory or storage of any appropriate type. A computer-readable medium can be any structure, device, component, product, or other means that can store, communicate, propagate, or transport the program for use by or in connection with the instruction execution system, apparatus, or device.

The illustrative block diagrams and flow charts depict process steps or blocks that may represent modules, segments, or portions of code that include one or more executable instructions for implementing specific logical functions or steps in the process. Although the particular examples illustrate specific process steps or acts, many alternative implementations are possible and commonly made by simple design choice. Acts and steps may be executed in different order from the specific description herein, based on considerations of function, purpose, conformance to standard, legacy structure, and the like.

While the present disclosure describes various embodiments, these embodiments are to be understood as illustrative and do not limit the claim scope. Many variations, modifications, additions and improvements of the described embodiments are possible. For example, those having ordinary skill in the art will readily implement the steps necessary to provide the structures and methods disclosed herein, and will understand that the process parameters, materials, and dimensions are given by way of example only. The parameters, materials, and dimensions can be varied to achieve the desired structure as well as modifications, which are within the scope of the claims. Variations and modifications of the embodiments disclosed herein may also be made while remaining within the scope of the following claims. For example, a few specific examples of network systems and methods are described. The illustrative system for content and device extensibility can be used with any suitable network structures, devices, content, and protocols. The illustrative techniques may be used with any suitable data processing configuration and with any suitable servers, computers, and devices.

## Claims

1. A network system **(100)** comprising:
a discovery subsystem **(102)** that identifies, enables for consumption, and consumes information, the discovery subsystem configured to isolate business contents **(104)** and device-specific logic **(106)** using modular domain-specific contents **(108)** and data definitions **(110)** for normalizing the domain-specific contents **(108)** and describing attributes **(112)** and value types **(114)** that uniquely define domain content independently of a device **(122).**

2. A system **(100)** as claimed in Claim 1 further comprising:
the discovery subsystem **(102)** that normalizes domain-specific content **(108)** and enables creation of content-generic processors **(116)** that are dedicated to business logics **(118)** which are generically abstracted independent of specific devices from which data is collected.

3. A system **(100)** as claimed in claim 1 or claim 2 further comprising:
the discovery subsystem **(102)** comprising:
a data collector **(120)** configured to collect data from devices **(118)** as specified by at least one data definition **(110);** and
a content manager **(124)** configured to issue calls to the data collector **(120)** for requested data.

4. The system **(100)** as claimed in Claim 3 further comprising:
the data collector **(120)** that handles data according to collector mapping rules **(128),** the collector mapping rules **(128)** comprising:
at least one filter **(130)** adapted to select device-specific rules **(132)** for a designated data definition **(110);**
at least one communication interface **(134)** adapted to communicate data over a plurality of protocols;
an option handler **(136)** adapted to collect data according to selected attributes **(112)** and priority;
a merge handler **(138)** adapted to merge data collected from different tables **(140)** of a management information base of a device into a single data definition; and
at least one configuration file **(142)** that defines mapping rules **(128)** in a selected format.

5. A system **(100)** as claimed in Claim 3 further comprising:
the data collector **(120)** that handles data according to a converter **(144)** comprising:
a data converter **(146)** adapted to transform data from a collected format to a normalized data definition format;
a parser **(148)** adapted to parse a collected data attribute to deduce multiple data constituents; and
an accumulator **(150)** adapted to combine at least one collected data value to deduce a single inferred data value.

6. A system **(100)** as claimed in Claim 3 further comprising:
the data collector **(120)** configured to handle data according to collector mapping rules **(128)** and a converter **(144)** to collect raw device data and return a normalized data definition to content managers.

7. A system **(100)** as claimed in Claim 3 further comprising:
the data collector **(120)** configured to create asynchronized application program interfaces (APIs) enabling data collection based on a data definition and callback when the data is collected.

8. A system **(100)** as claimed in Claim 3 further comprising:
the discovery subsystem **(102)** further comprising:
a data definition manager **(152)** configured to manage data definitions including loading data definitions **(110),** locating data definitions for a specific data collection request, manipulating a data definition table using set and get operations, and converting data types.

9. A system **(100)** as claimed in any preceding claim further comprising:
the discovery subsystem **(102)** configured to enable creation of a content processor **(116)** adapted to request multiple data definitions concurrently; and
the discovery subsystem **(102)** comprising a data collector **(120)** configured to assemble normalized data and feedback to the content processor to improve data gathering

10. An automated method for network discovery comprising:
modularizing data to be discovered from a network device into domain-specific content;
defining the domain specific content by normalized data definitions; and
isolating business content and device-specific logic according to the modularized domain-specific content and the data definitions.
